# EUROPEAN PATENT APPLICATION

(11) **EP 4 276 638 A1**
(43) Date of publication of application: **15.11.2023**
(21) Application number: 21925135.2
(22) Date of filing: 09.02.2021
(51) Int. Cl.: G06F 13/14, G06F 15/173, H04L 9/40

(54) **SYSTEM AND METHOD FOR ACCESSING REMOTE RESOURCE**

(71) Applicant: Huawei Technologies Co., Ltd., Shenzhen, Guangdong 518129 (CN)
(72) Inventor: CHENG, Chuanning, Shenzhen, Guangdong 518129 (CN); CHENG, Zhongwu, Shenzhen, Guangdong 518129 (CN); SHI, Wei, Shenzhen, Guangdong 518129 (CN)
(74) Representative: Pfenning, Meinig & Partner mbB
(86) International application number: PCT/CN2021/076161
(87) International publication number: WO 2022/170452

(57) **Abstract**

This application provides a system and a method for accessing a remote resource. The system includes a local node and a remote node. The local node is configured to: determine a resource access request, where the resource access request includes a resource access operation and an address that is of the local node and that is pointed to by the resource access operation; determine an address of a corresponding remote node; send an operation packet to the remote node, where the operation packet includes the resource access operation and the address of the remote node; and receive an operation result packet sent by the remote node, and determine an operation result based on the operation result packet. The remote node is configured to: receive the operation packet; and execute the resource access operation to obtain an operation result, and send an operation result packet to the local node. By using the system and method provided in this application, a memory, a hard disk, and other resources on the remote node can be directly and quickly accessed in a manner of the delivered resource access request, to avoid problems of a large access delay, a cumbersome process, and low processing efficiency.

## Description

### TECHNICAL FIELD

This application relates to the field of data access, and in particular, to a system and a method for accessing a remote resource.

### BACKGROUND

With development of big data, a scale-out (scale-out) system architecture is widely used in fields such as storage (store) and high-performance computing (high-performance computing, HPC). An entire scale-out system is formed by a plurality of nodes. Each node is equipped with an independent processor, a memory, a hard disk, and other devices. Generally, nodes in the system need to cooperate closely to complete a task. Therefore, the nodes often need to access resources from each other.

In a conventional technology, it is a cumbersome process for a local node to access a resource of a remote node. An example in which the local node reads data of the remote node is used. When receiving an instruction for reading data, the remote node first copies local data to a socket buffer (socket buffer) of a processor of the remote node, and then encapsulates a data packet in the processor of the remote node. After processing the data packet through a series of multi-layer network protocols, the remote node sends the processed data packet to a buffer (buffer) of a network adapter, and sends the processed data packet to the network adapter of the local node through a network. The local node then performs multi-layer network parsing, to obtain the data of the remote node. In this way, data reading is completed. In the foregoing technology, processors of the remote node and the local node are required to participate in processing. Therefore, compared with direct access to a local memory, the process in the conventional technology is complex and has very low processing performance.

In addition, in some other conventional manners, the local memory may alternatively access a memory of the remote node in a remote direct memory access (remote direct memory access, RDMA) manner. However, if a hard disk of the local node needs to access the memory of the remote node, the processor of the local node first needs to execute a series of operations such as executing an access command, delivering a work request (work request), and writing a doorbell (doorbell). In this way, the steps are still cumbersome. In addition, when the RDMA technology is used, the processor of the local node further needs to execute operations such as a software transport interface and asynchronous scheduling to complete the memory access. As a result, a delay is increased and consumption of a memory bandwidth is increased. Therefore, processing efficiency is also excessively low.

In view of this, an effective method needs to be provided to access a memory, a hard disk, and other resources on a remote node in a manner of directly delivering a resource access operation, to avoid problems of a large delay, a cumbersome process, and low processing efficiency for accessing a remote resource.

### SUMMARY

In view of this, this application provides a system and a method for accessing a remote resource. By using the foregoing system and method, a local node may directly access a remote memory, a hard disk, and a resource in another device by using a delivered resource access request, to avoid problems of a large delay, a cumbersome process, and low processing efficiency for accessing a remote resource.

According to a first aspect, this application provides a system for accessing a remote resource. The system includes a local node and a remote node. The local node is configured to: determine a resource access request, where the resource access request includes a resource access operation and an address that is of the local node and that is pointed to by the resource access operation; determine an address of the remote node corresponding to the address of the local node; send an operation packet to the remote node, where the operation packet includes the resource access operation and the address of the remote node; and receive an operation result packet sent by the remote node, and determine an operation result based on the operation result packet. The remote node is configured to: receive the operation packet; and execute the resource access operation included in the operation packet to obtain the operation result, and send the operation result packet to the local node, where the operation result packet includes the operation result.

In the foregoing technical solution, after determining the resource access request, the local node determines the resource access operation and the address of the local node that are carried in the resource access request, determines the address of the remote node based on the address of the local node, translates the resource access operation and the address of the remote node into a packet that can be transmitted over a network, and sends the packet to the remote node. After receiving the packet, the remote node may directly execute the resource operation on the address of the remote node, and return the operation result to the local node in a packet. In this way, a memory, a hard disk, and other resources on the remote node can be accessed by directly delivering the resource operation, to reduce an access delay and simplify access steps, thereby improving processing efficiency.

In some possible implementations, the resource access request further includes a remote node number, where the remote node number indicates the remote node to which the address of the remote node belongs. When sending the operation packet to the remote node, the local node is further configured to: send the operation packet to the remote node indicated by the remote node number.

In the foregoing technical solution, when there are a plurality of remote nodes in the system for accessing a remote resource, a remote node to which the resource access request is delivered may be determined based on the remote node number, to avoid sending the operation packet to the plurality of remote nodes, thereby improving access efficiency.

In some possible implementations, the address of the local node is a virtual address of the local node, and the address of the remote node is a virtual address of the remote node. The local node is further configured to: establish a first mapping relationship between the virtual address of the local node and a physical address of the local node, and establish a second mapping relationship between the physical address of the local node and the virtual address of the remote node, When determining the address of the remote node corresponding to the address of the local node, the local node is further configured to: determine, based on the first mapping relationship, the physical address of the local node corresponding to the virtual address of the local node; and determine, based on the second mapping relationship, the virtual address of the remote node corresponding to the physical address of the local node.

In the foregoing technical solution, user space in an operating system of the local node may be associated with physical address space of the local node, and the physical address space of the local node may be associated with user space in an operating system of the remote node. When the local node accesses the virtual address of the user space in the operating system of the local node, the access to the virtual address of the user space in the operating system of the remote node is actually translated into access to the virtual address of the user space in the operating system of the remote node. In this way, a memory, a hard disk, and other resources on the remote node can be accessed by directly delivering the resource operation, to reduce an access delay and simplify access steps.

In some possible implementations, the remote node is further configured to: establish a third mapping relationship between the virtual address of the remote node and a physical address of the remote node. When executing the resource operation included in the operation packet, the remote node is further configured to: determine, based on the third mapping relationship, the physical address of the remote node corresponding to the virtual address of the remote node; and execute, based on the physical address of the remote node, the resource access operation included in the operation packet.

Similarly, the remote node may also associate the user space in the operating system of the remote node with physical address space of the remote node, thereby improving efficiency of processing the resource access operation.

In some possible implementations, the virtual address of the local node includes a virtual page number of the local node and an offset, the virtual address of the remote node includes a virtual page number of the remote node and an offset, and the offset included in the virtual address of the local node is the same as the offset included in the virtual address of the remote node. When determining the address of the remote node corresponding to the address of the local node, the local node is further configured to: determine, based on the first mapping relationship, a physical page number of the local node corresponding to the virtual page number of the local node; determine, based on the second mapping relationship, the virtual page number of the remote node corresponding to the physical page number of the local node; and determine the virtual address of the remote node based on the offset in the address of the local node and the virtual page number of the remote node.

In some possible implementations, the resource operation includes at least one of the following: a processor read operation load, a processor write operation store, a processor atomic operation atomic, and DMA. In the foregoing technical solution, the system for accessing a remote resource provided in this application may be a storage system that supports a CHI protocol.

In some possible implementations, the first mapping relationship is stored in a first page table, and the second mapping relationship is stored in a second page table, where storage formats of the first page table and the second page table include any one of the following: a page table entry PTE and a page table pointer PTP. In some possible implementations, the third mapping relationship is stored in a third page table, where a storage format of the third page table includes any one of the following: a page table entry PTE and a page table pointer PTP.

In the foregoing technical solution, the first mapping relationship, the second mapping relationship, and the third mapping relationship are stored in the page tables in the format of the page table entry PTE or the page table pointer PTP. By using the format, the mapping relationships may be stored in the page tables discretely, thereby reducing storage space of the page tables.

According to a second aspect, this application provides a method for accessing a remote resource. The method includes:
determining a resource access request, where the resource access request includes a resource access operation and an address that is of a local node and that is pointed to by the resource access operation; determining an address of a remote node corresponding to the address of the local node; sending an operation packet to the remote node, where the operation packet includes the resource access operation and the address of the remote node; and receiving an operation result packet that is sent by the remote node and that includes an operation result, where the operation result is determined by the remote node by executing the resource access operation included in the operation packet. The resource access request further includes a remote node number, where the remote node number indicates the remote node to which the address of the remote node belongs. The sending an operation packet to the remote node further includes: sending the operation packet to the remote node indicated by the remote node number.

In some possible implementations, the address of the local node is a virtual address of the local node, and the address of the remote node is a virtual address of the remote node. The method further includes: establishing a first mapping relationship between the virtual address of the local node and a physical address of the local node, and establishing a second mapping relationship between the physical address of the local node and the virtual address of the remote node. The determining an address of a remote node corresponding to the address of the local node includes: determining, based on the first mapping relationship, the physical address of the local node corresponding to the virtual address of the local node; and determining, based on the second mapping relationship, the virtual address of the remote node corresponding to the physical address of the local node.

In some possible implementations, the virtual address of the local node includes a virtual page number of the local node and an offset, the virtual address of the remote node includes a virtual page number of the remote node and an offset, and the offset included in the virtual address of the local node is the same as the offset included in the virtual address of the remote node. The determining an address of a remote node corresponding to the address of the local node further includes: determining, based on the first mapping relationship, a physical page number of the local node corresponding to the virtual page number of the local node; determining, based on the second mapping relationship, the virtual page number of the remote node corresponding to the physical page number of the local node; and determining the virtual address of the remote node based on the offset in the address of the local node and the virtual page number of the remote node.

In some possible implementations, the resource access operation includes at least one of the following: a processor read operation load, a processor write operation store, a processor atomic operation atomic, and direct memory access DMA.

In some possible implementations, the method further includes: storing the first mapping relationship in a first page table, and storing the second mapping relationship in a second page table, where storage formats of the first page table and the second page table include any one of the following: a page table entry PTE and a page table pointer PTP.

According to a third aspect, this application provides a method for accessing a remote resource. The method includes:
receiving an operation packet sent by a local node, where the operation packet includes a resource access operation and an address of a remote node; and
executing the resource access operation to obtain an operation result, and sending an operation result packet including the operation result to the local node.

In some possible implementations, the address of the remote node is a virtual address of the remote node, and the method further includes: establishing a third mapping relationship between the virtual address of the remote node and a physical address of the remote node.

The executing the resource access operation further includes:
determining, based on the third mapping relationship, the physical address of the remote node corresponding to the virtual address of the remote node; and
executing, based on the physical address of the remote node, the resource access operation included in the operation packet.

In some possible implementations, the resource access operation includes at least one of the following:
a processor read operation load, a processor write operation store, a processor atomic operation atomic, and direct memory access DMA.

In some possible implementations, the method further includes:
storing the third mapping relationship in a third page table, where a storage format of the third page table includes any one of the following: a page table entry PTE and a page table pointer PTP.

According to a fourth aspect, this application provides a local node. The local node includes:
an operation generation unit, configured to determine a resource access request, where the resource access request includes a resource access operation and an address that is of the local node and that is pointed to by the resource access operation;
an address determining unit, configured to determine an address of a remote node corresponding to the address of the local node;
an operation sending unit, configured to send an operation packet to the remote node, where the operation packet includes the resource access operation and the address of the remote node; and
a result determining unit, configured to receive an operation result packet that is sent by the remote node and that includes an operation result, where the operation result is determined by the remote node by executing the resource access operation included in the operation packet.

In some possible implementations, the resource access request further includes a remote node number, where the remote node number indicates the remote node to which the address of the remote node belongs.

The operation sending unit is further configured to:
send the operation packet to the remote node indicated by the remote node number.

In some possible implementations, the address of the local node is a virtual address of the local node, and the address of the remote node is a virtual address of the remote node.

The local node further includes a local mapping determining unit, where the local mapping determining unit is configured to establish a first mapping relationship between the virtual address of the local node and a physical address of the local node, and establish a second mapping relationship between the physical address of the local node and the virtual address of the remote node.

The address determining unit is further configured to determine, based on the first mapping relationship, the physical address of the local node corresponding to the virtual address of the local node; and
determine, based on the second mapping relationship, the virtual address of the remote node corresponding to the physical address of the local node.

In some possible implementations, the virtual address of the local node includes a virtual page number of the local node and an offset, the virtual address of the remote node includes a virtual page number of the remote node and an offset, and the offset included in the virtual address of the local node is the same as the offset included in the virtual address of the remote node.

The address determining unit is further configured to determine, based on the first mapping relationship, a physical page number of the local node corresponding to the virtual page number of the local node;
determine, based on the second mapping relationship, the virtual page number of the remote node corresponding to the physical page number of the local node; and
determine the virtual address of the remote node based on the offset in the address of the local node and the virtual page number of the remote node.

In some possible implementations, the resource access operation includes at least one of the following:
a processor read operation load, a processor write operation store, a processor atomic operation atomic, and direct memory access DMA.

In some possible implementations, the local node further includes: a local mapping storage unit, where the local mapping storage unit is configured to store the first mapping relationship in a first page table, and store the second mapping relationship in a second page table, where storage formats of the first page table and the second page table include any one of the following: a page table entry PTE and a page table pointer PTP.

According to a fifth aspect, this application provides a remote node. The remote node includes: an operation receiving unit, configured to receive an operation packet sent by a local node, where the operation packet includes a resource access operation and an address of the remote node; and an executing and sending unit, configured to execute the resource access operation to obtain an operation result, and send an operation result packet including the operation result to the local node.

In some possible implementations, the address of the remote node is a virtual address of the remote node, and the remote node further includes a remote mapping determining unit, where the remote mapping determining unit is configured to establish a third mapping relationship between the virtual address of the remote node and a physical address of the remote node.

The executing and sending unit is configured to determine, based on the third mapping relationship, the physical address of the remote node corresponding to the virtual address of the remote node; and

execute, based on the physical address of the remote node, the resource access operation included in the operation packet.

In some possible implementations, the resource access operation includes at least one of the following:
a processor read operation load, a processor write operation store, a processor atomic operation atomic, and direct memory access DMA.

In some possible implementations, the remote node further includes: a remote mapping storage unit, where the remote mapping storage unit is configured to store the third mapping relationship in a third page table, where a storage format of the third page table includes any one of the following: a page table entry PTE and a page table pointer PTP.

According to a sixth aspect, this application further provides a computer program product. The computer program product includes: computer program code, where when the computer program code is run on a computer, the computer is enabled to perform the method for accessing a remote resource according to any one of the second aspect or the third aspect.

According to a seventh aspect, this application further provides a computer-readable medium. The computer-readable medium stores program code, and when the program code is run on a computer, the computer is enabled to perform the method for accessing a remote resource according to any one of the second aspect or the third aspect.

According to an eighth aspect, this application provides a chip, including at least one processor and an interface. The interface is configured to provide program instructions or data for the at least one processor; and the at least one processor is configured to execute the program line instructions, to implement the method for accessing a remote resource according to any one of the second aspect or the third aspect.

For technical effects that can be achieved in any one of the second aspect to the eighth aspect, refer to descriptions of beneficial effects in the first aspect. Details are not described herein again.

These aspects or other aspects of this application are simpler and easier to understand in descriptions of the following embodiments.

### BRIEF DESCRIPTION OF DRAWINGS

FIG. 1A is a schematic diagram of an architecture of a system for accessing a remote resource;
FIG. 1B is a schematic diagram of mapping between an address of a local node and an address of a remote node;
FIG. 1C is a schematic diagram of a specific architecture of a system for accessing a remote resource;
FIG. 2 is a schematic flowchart of a local node delivering a resource access operation to a remote node;
FIG. 3A is a schematic diagram of a structure of a first operating apparatus;
FIG. 3B is a schematic diagram of a structure of a second operating apparatus;
FIG. 4 is a schematic flowchart of an example applied to a system for accessing a remote resource;
FIG. 5 is a schematic flowchart of a method for accessing a remote resource;
FIG. 6 is a schematic diagram of a structure of a local node in a system for accessing a remote resource; and
FIG. 7 is a schematic diagram of a structure of a remote node in a system for accessing a remote resource.

### DESCRIPTION OF EMBODIMENTS

To make purposes, technical solutions, and advantages of this application clearer, the following further describes this application in detail with reference to accompanying drawings. A specific operation method in method embodiments may also be applied to an apparatus embodiment or a system embodiment. It should be noted that, in the description of this application, "at least one" refers to one or more, and "a plurality of refers to two or more. In view of this, in embodiments of this application, "a plurality of may alternatively be understood as "at least two". "And/or" describes an association relationship for describing associated objects and represents that three relationships may exist. For example, A and/or B may represent the following three cases: Only A exists, both A and B exist, and only B exists. In addition, if there is no special description, the character "/" generally indicates an "or" relationship between the associated objects. In addition, it should be understood that, in the description of this application, terms such as "first" and "second" are only used to distinguish the purpose of the description, but cannot be understood as an indication or implication of relative importance, and cannot be understood as an indication or implication of a sequence.

Some terms in embodiments of this application are first explained and described below, to facilitate easy understanding of a person skilled in the art.
(1) Atomic (atomic) operation: The atomic operation is an independent and inseparable operation. In a single-core environment, a thread is generally not switched during an atomic operation, and the thread is switched either before or after the atomic operation is completed. In a broader sense, an atomic operation refers to a series of operation steps that are necessarily completed as a whole. If any step is not completed, all completed steps need to be rolled back. In this way, it can be ensured that all operation steps are not completed or all operation steps are completed. For example, in a single-core system, a single machine instruction can be considered as an atomic operation. However, in a multi-core system, a single machine instruction is not an atomic operation because a plurality of instruction streams are run in parallel in the multi-core system. When one core executes an instruction, instructions executed by other cores at the same time may be for operating a same block memory area, resulting in data competition. Operations completed in a single instruction can be considered as atomic operations.
(2) Memory mapping: The memory mapping refers to a one-to-one correspondence between a location of a file on a hard disk and an area with a same size in logical address space of a process. When a segment of data in a memory needs to be accessed, the access to the segment of data in the memory is translated into access to a segment of data in the file. A purpose of the manner is to reduce data copy operations between user space and kernel space. When a large amount of data needs to be transmitted, a memory mapping manner is used to access a file to enhance efficiency.
(3) Memory management unit (memory management unit, MMU): The MMU is sometimes referred to as a paged memory management unit (paged memory management unit, PMMU). The MMU is a type of computer hardware that handles memory access requests from a central processing unit. Functions of the MMU include virtual page table to physical page table translation (namely, virtual memory management), memory protection, and control of a central processing unit high-speed buffer. The MMU is responsible for bus arbitration and bank switching in a simple computer architecture.
(4) Peripheral component interconnect-express (peripheral component interconnect-express, PCI-e): The PCI-e is a general-purpose bus specification, is advocated and promoted by Intel^{®}, and is designed to replace a bus transport interface inside a conventional computer system.
(5) Non-volatile memory express (Non-Volatile Memory express, NVMe): The NVMe is a specification of a solid state disk (solid state disk, SSD) using a PCI-e channel. When the NVMe is initially designed, a low delay and parallelism of the PCI-e SSD, and parallelism of a processor, a platform, and an application are fully used. The parallelism of the SSD can be fully used by hardware and software of a host. Compared with an advanced host controller interface (advanced host controller interface, AHCI) standard, the NVMe can bring performance improvement in a plurality of aspects.
(6) Memory-mapped I/O (memory-mapped I/O, MMIO): The MMIO is a part of a PCI specification, where an I/O device is placed in memory space instead of I/O space. From a perspective of a processor, after the memory-mapped I/O, a system device is accessed the same as a memory.
(7) Virtual address (virtual address, VA): The VA does not really exist in a computer. Each process is allocated with own virtual space and can only access the space with which the process is allocated to use.
(8) Page table entry (page table entry, PTE): The PTE is a lowest level of a page table and processes a page directly. A value includes a physical address of a page, and also includes bits that indicate whether the entry is valid and whether a related page is in a physical memory.
(9) Coherent hub interface (coherent hub interface, CHI): A CHI protocol-based system architecture may include an independent CPU, a processor cluster, a graphics processing unit, a memory controller, an I/O bridge, a PCI-e subsystem, and a CHI interconnection line. Specifically, based on CHI protocol node types, components can be classified and named as follows: a request node (request node, RN), responsible for generating a protocol operation (transaction), including read and write; a home node (home node, HN), configured to receive the protocol operation generated from the RN; and a slave node (slave node, SN), configured to receive a request from the HN, complete the corresponding operation, and return a response.
(10) Translation lookaside buffer (translation lookaside buffer, TLB): The TLB is a buffer of a processor and is used by a memory management unit to improve a translation speed from a virtual address to a physical address. The TLB has a fixed quantity of spatial slots for storing tab page table entries that map virtual addresses to physical addresses.

The following clearly and completely describes the technical solutions in embodiments of this application with reference to the accompanying drawings in embodiments of this application. Apparently, the described embodiments are some rather than all of embodiments of this application, and are based on embodiments of this application. All other embodiments obtained by a person of ordinary skill in the art without creative efforts shall fall within the protection scope of this application.

In the conventional technology, a remote direct memory access (remote direct memory access, RDMA) technology may be implemented based on a remote memory invoking manner of an Ethernet and an infiniband (infiniband, IB) to access and invoke a memory of a remote node. Specifically, a local node may directly access a remote memory by using a RDMA-aware network interface controller (RDMA-aware network interface controller, RNIC). However, when invoking of the remote memory is implemented by using the Ethernet and the IB, an additional switch, an adapter, and complex translation between a protocol stack to PCI-e (peripheral component interconnect-express, peripheral component interconnect-express) are required.

Specifically, when the local node needs to access the remote node, a channel connection is created. A head point and an end point of each channel are two pairs of queue pairs (queue pairs, QPs). The local node directly accesses the RNIC by using a network adapter, and cooperates, after completing a data processing request, with a complete queue poll (CQ poll) mechanism or an interrupt mechanism to access and store data. In addition, an RDMA technology provides a software transport interface (software transport interface, Verbs) to facilitate the local node to send a work request (work request, WR), where the WR describes content of a message that is expected to be transmitted to the remote node, and the WR notifies a work queue (work queue, WQ) in the QPs. In the WQ, the WR of the local node is translated into a format of a work queue element (Work Queue Element, WQE), waits to be asynchronously scheduled and parsed by the RNIC, and finally obtains a real message from a buffer pointed to by the WQE and returns the message to the local node. Therefore, when the RDMA technology is used, a processor still needs to execute operations such as the software transport interface and asynchronous scheduling. However, once processing and execution of the processor is performed, a delay is increased and bandwidth consumption is increased, and efficiency is also low. In addition, RDMA is a point-to-point protocol. The RDMA requires a dedicated network adapter (for example, an Ethernet network adapter or an IB network adapter) to be installed on each node, resulting in high costs for implementing functions of the RDMA. In addition, even if the RDMA technology is used, resources of nodes cannot be properly and efficiently allocated.

In view of this, embodiments of this application provide a system and a method for accessing a remote resource. In this way, a memory, a hard disk, and other resources on a remote node can be directly and quickly accessed in a manner of delivering a resource access request, to avoid problems of a large access delay, a cumbersome process, and low processing efficiency.

The technical solutions provided in this application may be applied to a storage system that has more than two nodes. Each node in the storage system may have an independent hardware structure, to independently implement a same service or different services. In addition, it should be noted that, in embodiments of this application, each node may have specific resources, and a resource size of each node may be the same or different. This is not specifically limited in this application.

For ease of understanding, in the following descriptions, a node requesting to access another remote node is named as a local node, and a node on which a memory, a processor, a hard disk, and other space resources can be accessed by another node is named as a remote node. It should be noted that, in embodiments of this application, a node may serve as a local node in a time period and serve as a remote node in another time period, or a node may serve as both a local node and a remote node for another node.

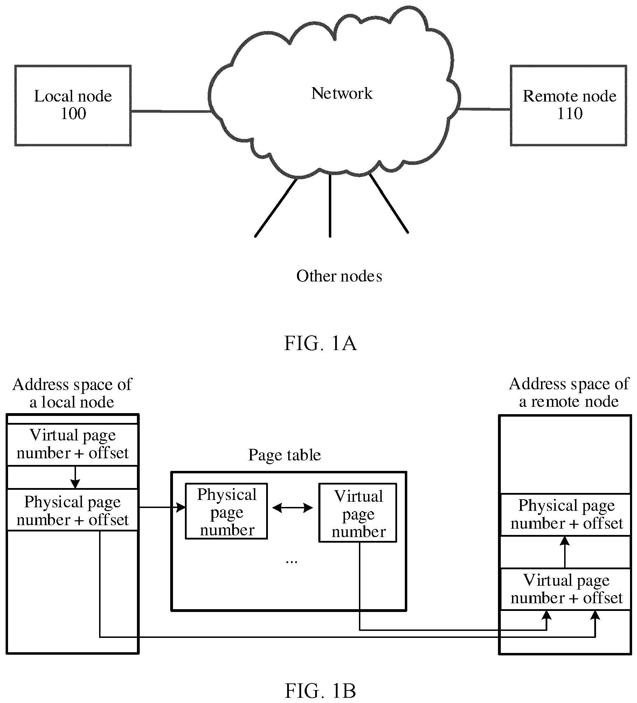

FIG. 1A is a schematic diagram of an architecture of a system for accessing a remote resource. The system includes: a local node 100 and a remote node 110. The local node 100 is configured to: determine a resource access request, where the resource access request includes a resource access operation and an address that is of the local node 100 and that is pointed to by the resource access operation; determine an address of the remote node 110 corresponding to the address of the local node 100; send an operation packet to the remote node 110, where the operation packet includes the resource access operation and the address of the remote node 110; and receive an operation result packet sent by the remote node 110, and determine an operation result based on the operation result packet.

The remote node 110 is configured to: receive the operation packet; and execute the resource access operation included in the operation packet to obtain the operation result, and send the operation result packet to the local node 100, where the operation result packet includes the operation result.

Both the local node 100 and the remote node 110 may be considered as nodes in a storage system. When data needs to be exchanged between the nodes, the local node 100 may access a resource of the remote node 110 by delivering an operation packet carrying a resource access operation. For example, when a computing task on the local node 100 needs to perform collaborative processing by using a resource of the local node 100 and a resource of the remote node 110, the local node 100 may send an operation packet for obtaining computing data to the remote node 110, to obtain the computing data on the remote node, thereby completing the computing task.

Specifically, the resource access request may include operations of the following types: a processor read (load) operation, a processor write (store) operation, a processor atomic (atomic) operation, and direct data access DMA. In addition, by using the address of the local node 100 included in the resource access request, the resource access operation can be executed on the address of the remote node 110 corresponding to the address of the local node 100.

The address of the local node 100 may be a virtual address of the local node 100 or a physical address of the local node 100, and the address of the remote node 110 may be a virtual address of the remote node 110 or a physical address of the remote node 110. The operation result packet is a packet that can be transmitted over a network. For example, an example of generating a network packet whose operation packet is of an RDMA type is used herein. An RDMA read packet may be generated based on the load operation, an RDMA write packet may be generated based on the store operation, and an RDMA atomic packet may be generated based on the atomic operation. Similarly, the operation result packet sent to the local node 100 is also a packet that can be transmitted over a network. A specific packet generation manner is not described herein again, and should be known by a person skilled in the art.

In some possible implementations, the resource access request further includes a remote node number, where the remote node number indicates the remote node 110 to which the address of the remote node 110 belongs. When sending the operation packet to the remote node 110, the local node 100 is further configured to: send the operation packet to the remote node 110 indicated by the remote node number; or determine, when there are a plurality of remote nodes 110, a remote node 110 to which the resource access request is delivered based on the remote node number.

In some possible implementations, the address of the local node 100 is a virtual address of the local node 100, and the address of the remote node 110 is a virtual address of the remote node 110. The local node 100 is further configured to: establish a first mapping relationship between the virtual address of the local node 100 and a physical address of the local node 100, and establish a second mapping relationship between the physical address of the local node 100 and the virtual address of the remote node 110. When determining the address of the remote node 110 corresponding to the address of the local node 100, the local node 100 is further configured to: determine, based on the first mapping relationship, the physical address of the local node 100 corresponding to the virtual address of the local node 100; and determine, based on the second mapping relationship, the virtual address of the remote node 110 corresponding to the physical address of the local node 100.

Specifically, the virtual address of the local node 100 is located in virtual address space of the local node 100, where the virtual address space is a part of user space of an operating system of the local node 100. The physical address of the local node 100 is located in physical address space of the local node 100, where the physical address space is a part of resource space of the local node 100. The virtual address of the remote node 110 exists in virtual address space of the remote node 110, where the virtual address space is a part of user space of an operating system of the remote node 110.

In this application, the local node 100 may establish the first mapping relationship between the virtual address of the local node 100 and the physical address of the local node 100, and establish the second mapping relationship between the physical address of the local node 100 and the virtual address of the remote node 110. Once the mapping is established, the user space in the operating system of the local node 100 is associated with the physical address space of the local node 100, and the physical address space of the local node 100 is associated with the user space in the operating system of the remote node 110. When the local node 100 accesses the virtual address of the user space in the operating system of the local node 100, the access to the virtual address of the user space in the operating system of the local node 100 is actually translated into access to the virtual address of the user space in the operating system of the remote node 110. A specific address mapping manner should be known by a person skilled in the art, and details are not described herein again.

In some possible implementations, the remote node 110 is further configured to: establish a third mapping relationship between the virtual address of the remote node 110 and a physical address of the remote node 110. When executing the resource operation included in the operation packet, the remote node 110 is further configured to: determine, based on the third mapping relationship, the physical address of the remote node 110 corresponding to the virtual address of the remote node 110; and execute, based on the physical address of the remote node 110, the resource access operation included in the operation packet.

Similar to the foregoing embodiment, the remote node 110 may also associate the user space in the operating system of the remote node 110 with the physical address space of the remote node 110. A specific mapping manner should be known by a person skilled in the art.

In some possible implementations, the virtual address of the local node 100 includes a virtual page number of the local node 100 and an offset, the virtual address of the remote node 110 includes a virtual page number of the remote node 110 and an offset, and the offset included in the virtual address of the local node 100 is the same as the offset included in the virtual address of the remote node 110. When determining the address of the remote node 110 corresponding to the address of the local node 100, the local node 100 is further configured to: determine, based on the first mapping relationship, a physical page number of the local node 100 corresponding to the virtual page number of the local node 100; determine, based on the second mapping relationship, the virtual page number of the remote node 110 corresponding to the physical page number of the local node 100; and determine the virtual address of the remote node 110 based on the offset in the address of the local node 100 and the virtual page number of the remote node 110.

For example, refer to FIG. 1B. FIG. 1B is a schematic diagram of mapping an address of a local node 100 to an address of a remote node 110. The resource access request carries the address of the local node 100. The local node 100 determines the physical page number of the local node 100 based on the virtual page number of the local node 100, queries a page table for the remote node number corresponding to the physical page number of the local node 100 and the virtual page number of the remote node 110, and obtains the address of the remote node 110 based on the virtual page number of the remote node 110 and the offset. In some possible implementations, the local node is further configured to: store the first mapping relationship in a first page table, and store the second mapping relationship in a second page table, where storage formats of the first page table and the second page table include any one of the following: a page table entry PTE and a page table pointer PTP. The remote node is further configured to: store the third mapping relationship in a third page table, where a storage format of the third page table includes any one of the following: a page table entry PTE and a page table pointer PTP.

For example, one PTE corresponds to one page table entry. For example, one PTE has a 32-bit address, and an address corresponding to the PTE may be stored in a 20^{th} bit to a 31^{st} bit. The page table entry may store the address of the remote node 110, and may further store other information about the remote node. For example, when a type of the operation packet is RDMA, the page table entry may further include a queue pair number (QP number) and the like.

Embodiments of this application provide a system for accessing a remote resource, to resolve a problem that a remote memory, a hard disk, and a resource in another device cannot be directly accessed currently by using a resource access request directly delivered by a local node. The resource access request delivered by the local node is translated into a packet that can be transmitted over a network, an operation packet carries a resource access operation, and the resource access operation is sent to a remote node. In this way, the local node can directly access a resource of the remote node, and when the resource of the remote node is accessed, an access delay can be reduced and access steps can be simplified, thereby improving processing efficiency.

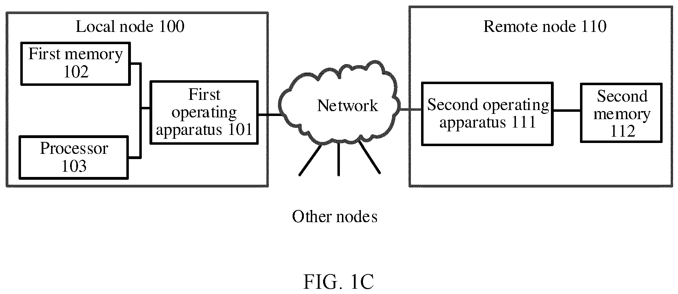

Refer to FIG. 1C. FIG. 1C is a schematic diagram of a specific architecture of a system for accessing a remote resource. Optionally, a local node 100 may include a first memory 102 and a processor 103, and a remote node 110 includes a second memory 112. To ensure that the first memory 102 and the processor 103 of the local node 100 can deliver a resource access operation to the second memory 112 of the remote node 110, a first operating apparatus 101 is disposed on the local node 100, a second operating apparatus 111 is disposed on the remote node 110, and the first operating apparatus 101 and the second operating apparatus 111 may communicate with each other. The first operating apparatus 101 transmits an operation packet carrying the resource access operation to the second operating apparatus 111, so that the resource access operation delivered by the first memory 102 or the processor 103 can be executed on the second memory 112.

The processor 103 is a control center of the local node 100, uses various interfaces and lines to connect various parts of the entire node, and executes various functions of a computer system and/or processes data by running or executing software programs and/or modules stored in the first memory 102 and invoking data stored in the first memory 102. The processor 103 may be formed by an integrated circuit (integrated circuit, IC), for example, may be formed by a single packaged IC, or may be formed by a plurality of successive packaged ICs that have same functions or different functions. In an implementation of this application, the processor 103 may be at least one central processing unit (central processing unit, CPU for short). The CPU may be a single computing core, or may be a multi-computing core, or may be a processor of a physical machine, or may be a processor of a virtual machine.

The first memory 102 and the second memory 112 are configured to store program instructions, data, and the like. It may be understood that, the first memory 102 and the second memory 112 in this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). In addition, the first memory 102 and the second memory 112 in this application may alternatively be a magnetic disk, a hard disk, a USB flash drive, a removable hard disk, an optical disc, a solid state disk (solid state disk, SSD), or any non-transitory (non-transitory) machine-readable medium that can store program code, such as another non-volatile memory. It should be noted that, the first memory 102 and the second memory 112 of the system and the method described herein are intended to include but not limited to these memories and any other suitable types of memories.

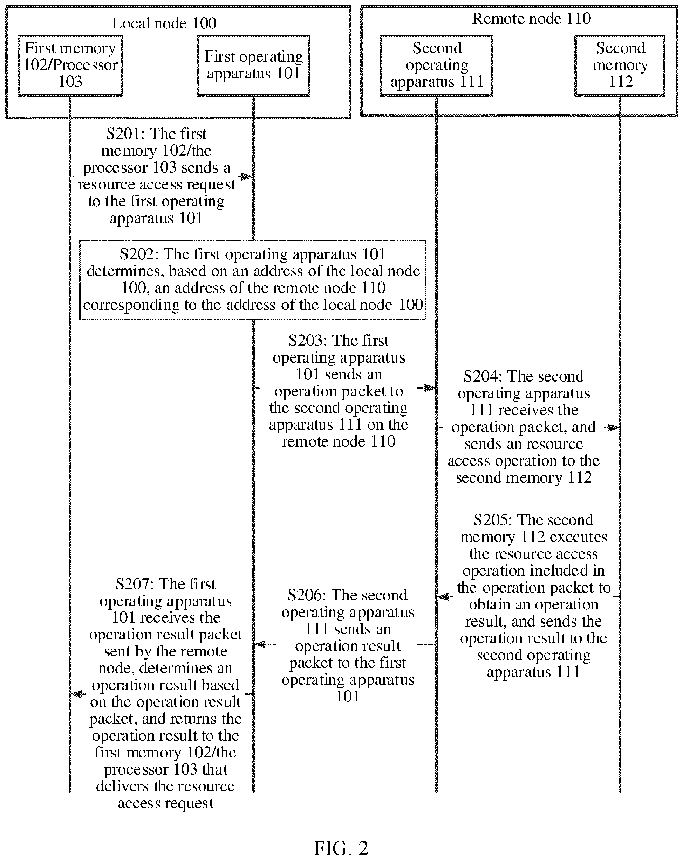

With reference to the system architecture shown in FIG. 1C, FIG. 2 is a schematic flowchart described from a perspective of delivering a resource access request by a local node 100 to a remote node 110. Refer to FIG. 2. A method includes steps S201 to S207.

S201: A processor 103/a first memory 102 sends a resource access request to a first operating apparatus 101, where the resource access request includes a resource access operation and an address that is of the local node 100 and that is pointed to by the resource access operation the resource access operation points.

The resource access request may be delivered by the first memory 102 in the local node 100, or may be delivered by the processor 103 in the local node 100.

S202: The first operating apparatus 101 determines, based on the address of the local node 100, an address of the remote node 110 corresponding to the address of the local node 100. Optionally, the first operating apparatus 101 may determine, based on the address of the local node 100, the address of the remote node 110 corresponding to the address of the local node 100. The first operating apparatus 101 determines a page table directory address corresponding to the address of the local node 100; searches, based on the address of the local node 100, a page table directory pointed to by the page table directory address for a page table address to which the address of the local node 100 points; and searches, based on the address of the local node 100, a page table pointed to by the page table address for a page table entry corresponding to the address of the local node 100, and determines, based on the page table entry, the address of the remote node 110 corresponding to the address of the local node 100. The resource access request further includes a remote node number. When there are a plurality of remote nodes 110, a remote node to which the resource access request is delivered is determined based on the remote node number.

S203: The first operating apparatus 101 sends an operation packet to a second operating apparatus 111 on the remote node 110.

Specifically, the first operating apparatus 101 generates, based on a load/store/atomic operation delivered by the local node 100, an operation packet that can be transmitted over a network. For example, an example of generating a network packet whose operation packet is of an RDMA type is used herein. An RDMA read packet is generated based on the load operation delivered by the first memory 102, an RDMA write packet is generated based on the store operation delivered by the first memory 102, and an RDMA atomic packet is generated based on the atomic operation delivered by the first memory 102.

S204: The second operating apparatus 111 receives the operation packet, and sends the resource access operation to a second memory 112.

Specifically, the second operating apparatus 111 receives the operation packet, to obtain the resource access request delivered by the first memory 102 and obtain the resource access operation and the address of the remote node 110, and sends the resource access operation to the second memory 112. In this way, by using the first operating apparatus 101 and the second operating apparatus 111, the local node 100 can directly deliver the resource access request to the second memory 112 of the remote node 110, to implement mutual access between the nodes.

S205: The second memory 112 executes the resource access operation included in the operation packet to obtain an operation result, and sends the operation result to the second operating apparatus 111.

After receiving the resource access operation and the address of the remote node 110, the second memory 112 on the remote node 110 executes the resource access operation, and sends the operation result of the resource access request to the second operating apparatus 111.

For example, if the resource access request is the load operation, corresponding data is read from the address of the remote node 110 to return; or if the resource access request is the store operation, write data carried in the resource access request is written into the address of the remote node 110.

S206: The second operating apparatus 111 sends an operation result packet to the first operating apparatus 101.

Similarly, based on the operation result sent by the second operating apparatus 111, the operation result packet for network transmission may also be generated. A specific packet generation manner is not described herein again, and should be known by a person skilled in the art.

S207: The first operating apparatus 101 receives the operation result packet sent by the remote node, determines an operation result based on the operation result packet, and returns the operation result to the first memory 102/the processor 103 that delivers the resource access request.

When the resource access request is delivered by the first memory 102 of the local node 100, the operation result is returned to the first memory 102 of the local node 100. When the resource access request is delivered by the processor 103 of the local node 100, the operation result is returned to the processor 103 of the local node 100.

In this embodiment of this application, by using a first operating apparatus and a second operating apparatus in a system for accessing a remote resource, the first operating apparatus translates a resource access request delivered by a local node into a packet that can be transmitted over a network, and the second operating apparatus parses the packet transmitted over the network and directly sends the resource access request to a memory of a remote node. In this way, the local node can directly access the remote node, and when the remote resource is accessed, an access delay is reduced and access steps are simplified, thereby improving processing efficiency.

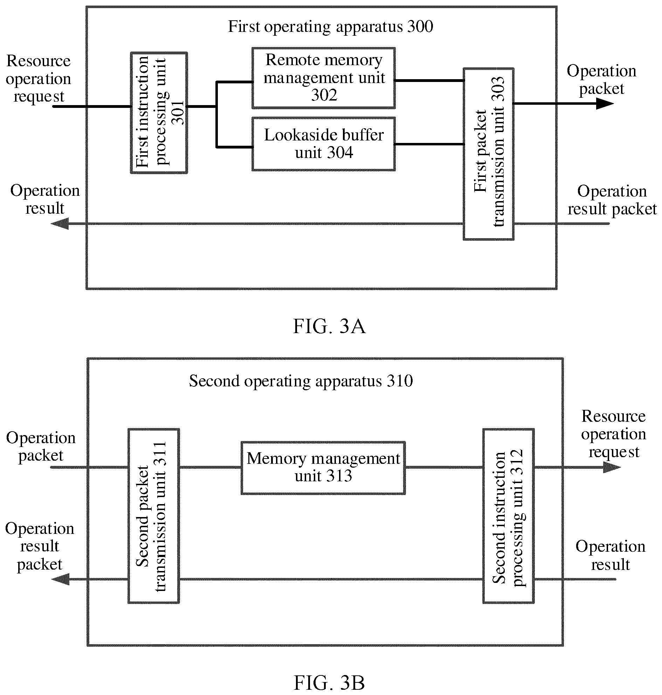

This application further provides a first operating apparatus. FIG. 3A is a schematic diagram of an architecture of a first operating apparatus 300. The first operating apparatus 300 includes: a first instruction processing unit 301, a remote memory management unit 302, and a first packet transmission unit 303.

The first instruction processing unit 301 is configured to receive a resource access request sent by a local node 100, where the resource access request includes a resource access operation and an address of the local node 100; send the address of the local node 100 to the remote memory management unit 302; and receive an operation result packet sent by the first packet transmission unit 303, determine an operation result based on the operation result packet, and send the operation result to the local node 100.

The remote memory management unit 302 is configured to determine, based on the address of the local node 100, an address of a remote node 110 corresponding to the address of the local node 100.

The first packet transmission unit 303 is configured to send the operation packet to the remote node 110; and receive an operation result packet sent by the remote node 110, and determine an operation result based on the operation result packet.

The first instruction processing unit 301 may receive the resource access request delivered by a first memory 102 of the local node 100, and the first instruction processing unit 301 may also receive the resource access request delivered by a processor 103 of the local node 100.

In some possible implementations, the resource access request further includes a remote node number, where the remote node number indicates the remote node 110 to which the address of the remote node 110 belongs. The first instruction processing unit 301 is further configured to send the operation packet to the remote node 110 indicated by the remote node number; or determine, when there are a plurality of remote nodes 110, a remote node 110 to which the resource access request is delivered based on the remote node number.

In some possible implementations, the address of the local node 100 is a virtual address of the local node 100, and the address of the remote node 110 is a virtual address of the remote node 110; a first mapping relationship between the virtual address of the local node 100 and a physical address of the local node 100 is established, and a second mapping relationship between the physical address of the local node 100 and the virtual address of the remote node 110 is established. The remote memory management unit 302 is further configured to: determine, based on the first mapping relationship, the physical address of the local node 100 corresponding to the virtual address of the local node 100; and determine, based on the second mapping relationship, the virtual address of the remote node 110 corresponding to the physical address of the local node 100.

In some possible implementations, the virtual address of the local node 100 includes a virtual page number of the local node 100 and an offset, the virtual address of the remote node 110 includes a virtual page number of the remote node 110 and an offset, and the offset included in the virtual address of the local node 100 is the same as the offset included in the virtual address of the remote node 110. The remote memory management unit 302 is further configured to: determine, based on the first mapping relationship, a physical page number of the local node 100 corresponding to the virtual page number of the local node 100; determine, based on the second mapping relationship, the virtual page number of the remote node 110 corresponding to the physical page number of the local node 100; and determine the virtual address of the remote node 110 based on the offset in the address of the local node 100 and the virtual page number of the remote node 110.

In some possible implementations, the remote memory management unit 302 is further configured to store the first mapping relationship in a first page table, and store the second mapping relationship in a second page table, where storage formats of the first page table and the second page table include any one of the following: a page table entry PTE and a page table pointer PTP. The remote node is further configured to: store a third mapping relationship in a third page table, where a storage format of the third page table includes any one of the following: a page table entry PTE and a page table pointer PTP.

In some possible implementations, the first operating apparatus 300 further includes a translation lookaside buffer unit 304, where the translation lookaside buffer unit 304 is configured to buffer commonly used page table entries in the first page table and the second page table. If the first page table and the second page table in the remote memory management unit 302 need to be accessed during each translation from the address of the local node 100 to the address of the remote node 110, it takes long time. Therefore, by setting the translation lookaside buffer unit 304 as a high-level buffer storing commonly used page table entries, an address translation speed can be improved. For example, the translation lookaside buffer unit 304 stores commonly used page table entries, and the commonly used page table entries are a subset of the first page table or a subset of the second page table. In this way, the translation lookaside buffer unit 304 can first search for the commonly used page table entries to perform address translation, so that the address translation speed can be improved.

This application further provides a second operating apparatus 310. FIG. 3B is a schematic diagram of an architecture of a second operating apparatus 310. The operating apparatus 310 includes: a second packet transmission unit 311 and a second instruction processing unit 312.

The second packet transmission unit 311 is configured to: receive an operation packet sent by a local node, where the operation packet includes a resource access operation and an address of a remote node, and send the resource access operation to the second instruction processing unit 312; and receive an operation result, and send an operation result packet including the operation result to a local node 100.

The second instruction processing unit 312 is configured to: receive the resource access operation, execute the resource access operation to obtain an operation result, obtain an operation result, and send the operation result to the second packet transmission unit 311.

In some possible implementations, the address of the remote node is a virtual address of the remote node, and the second operating apparatus 310 further includes a memory management unit 313, where the memory management unit 313 is configured to establish a third mapping relationship between the virtual address of the remote node and a physical address of the remote node.

The second instruction processing unit 312 is configured to determine, based on the third mapping relationship, the physical address of the remote node corresponding to the virtual address of the remote node; and execute, based on the physical address of the remote node, the resource access operation included in the operation packet.

In some possible implementations, the memory management unit 313 is configured to store the third mapping relationship in a third page table, where a storage format of the third page table includes any one of the following: a page table entry PTE and a page table pointer PTP.

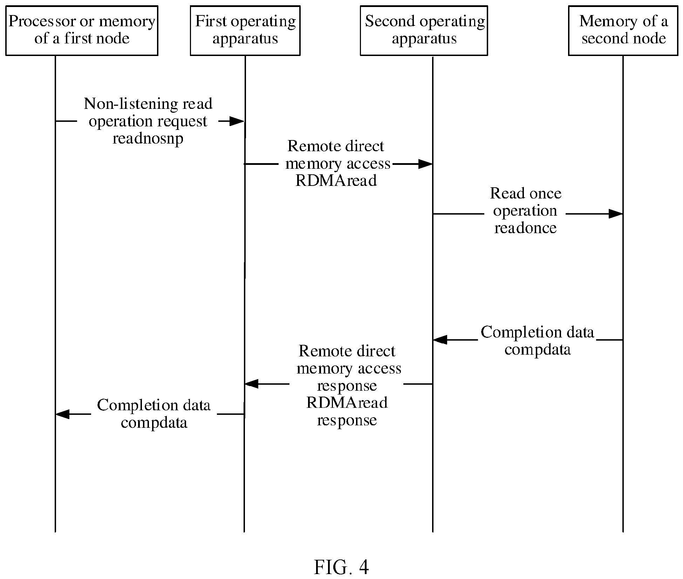

Based on the system for accessing a remote resource provided in the foregoing embodiment, this embodiment provides an example applied to the system for accessing a remote resource. By using a scenario in which a local node of the system for accessing a remote resource delivers a load operation to a remote node is used as an example, the system is based on a CHI bus architecture, and a delivered resource access request is translated into a packet of an RDMA type. FIG. 4 is a schematic flowchart of an example applied to a system for accessing a remote resource.

A processor or a memory on the local node sends a non-listening read operation request readnosnp (load operation) to a first operating apparatus, and the first operating apparatus determines an address of the local node, and queries a page table directory on a remote memory unit, to obtain a queue pair number (queue pair number, QPN) corresponding to the readnosnp request and an address of the remote node. The first operating apparatus translates the readnosnp request into an RDMA read operation, and sends the RDMA read operation to a second operating apparatus. The second operating apparatus translates RDMA read into a read once operation readonce, and sends the readonce to a memory of the remote node, to obtain data at the address of the remote node; and receives completion data compdata sent by the remote node, translates the compdata into an RDMA read response, and sends the RDMA read response to the first operating apparatus. After receiving the RDMA read response, the first operating apparatus extracts the compdata, and returns the compdata to the processor or the memory on the local node that delivers the readnosnp request.

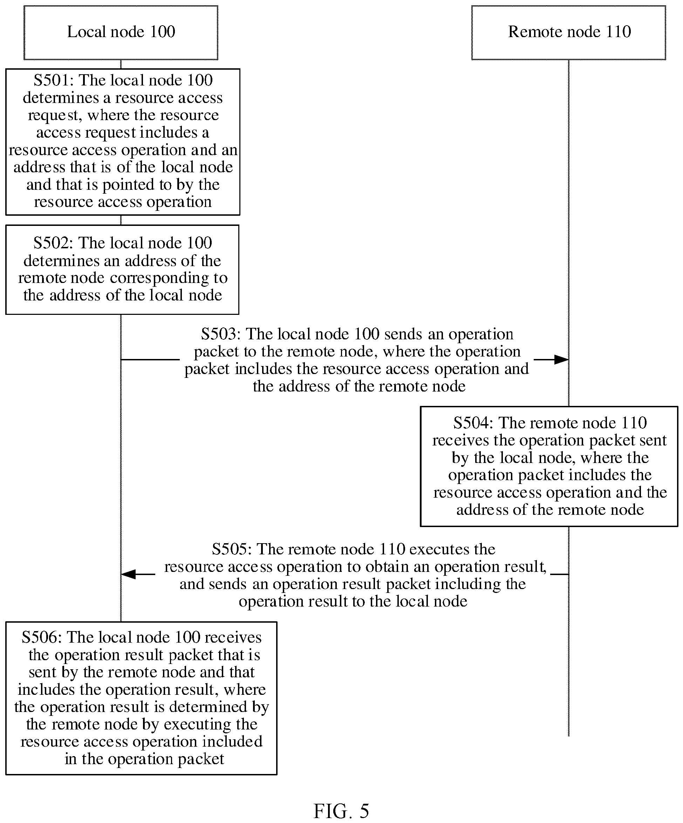

This application further provides a method for accessing a remote resource. The method is applied to the local node 100 and the remote node 110 in the foregoing embodiments. Refer to FIG. 5. The method includes the following steps.

S501: The local node 100 determines a resource access request, where the resource access request includes a resource access operation and an address that is of the local node and that is pointed to by the resource access operation.

S502: The local node 100 determines an address of the remote node corresponding to the address of the local node.

S503: The local node 100 sends an operation packet to the remote node, where the operation packet includes the resource access operation and the address of the remote node.

S504: The remote node 110 receives the operation packet sent by the local node, where the operation packet includes the resource access operation and the address of the remote node.

S505: The remote node 110 executes the resource access operation to obtain an operation result, and sends an operation result packet including the operation result to the local node.

S506: The local node 100 receives the operation result packet that is sent by the remote node and that includes the operation result, where the operation result is determined by the remote node by executing the resource access operation included in the operation packet.

In some possible implementations, the resource access request further includes a remote node number, where the remote node number indicates the remote node to which the address of the remote node belongs.

The sending an operation packet to the remote node further includes: sending the operation packet to the remote node indicated by the remote node number.

In some possible implementations, the address of the local node is a virtual address of the local node, and the address of the remote node is a virtual address of the remote node. The method further includes: establishing a first mapping relationship between the virtual address of the local node and a physical address of the local node, and establishing a second mapping relationship between the physical address of the local node and the virtual address of the remote node. The determining an address of the remote node corresponding to the address of the local node includes: determining, based on the first mapping relationship, the physical address of the local node corresponding to the virtual address of the local node; and determining, based on the second mapping relationship, the virtual address of the remote node corresponding to the physical address of the local node.

In some possible implementations, the virtual address of the local node includes a virtual page number of the local node and an offset, the virtual address of the remote node includes a virtual page number of the remote node and an offset, and the offset included in the virtual address of the local node is the same as the offset included in the virtual address of the remote node. The determining an address of the remote node corresponding to the address of the local node further includes: determining, based on the first mapping relationship, a physical page number of the local node corresponding to the virtual page number of the local node; determining, based on the second mapping relationship, the virtual page number of the remote node corresponding to the physical page number of the local node; and determining the virtual address of the remote node based on the offset in the address of the local node and the virtual page number of the remote node.

In some possible implementations, the address of the remote node is a virtual address of the remote node, and the method further includes: establishing a third mapping relationship between the virtual address of the remote node and a physical address of the remote node. The executing the resource access operation further includes: determining, based on the third mapping relationship, the physical address of the remote node corresponding to the virtual address of the remote node; and executing, based on the physical address of the remote node, the resource access operation included in the operation packet.

In some possible implementations, the resource access operation includes at least one of the following: a processor read operation load, a processor write operation store, a processor atomic operation atomic, and direct memory access DMA. In some possible implementations, the method further includes: storing the first mapping relationship in a first page table, and storing the second mapping relationship in a second page table, where storage formats of the first page table and the second page table include any one of the following: a page table entry PTE and a page table pointer PTP.

In some possible implementations, the method further includes: storing the third mapping relationship in a third page table, where a storage format of the third page table includes any one of the following: a page table entry PTE and a page table pointer PTP.

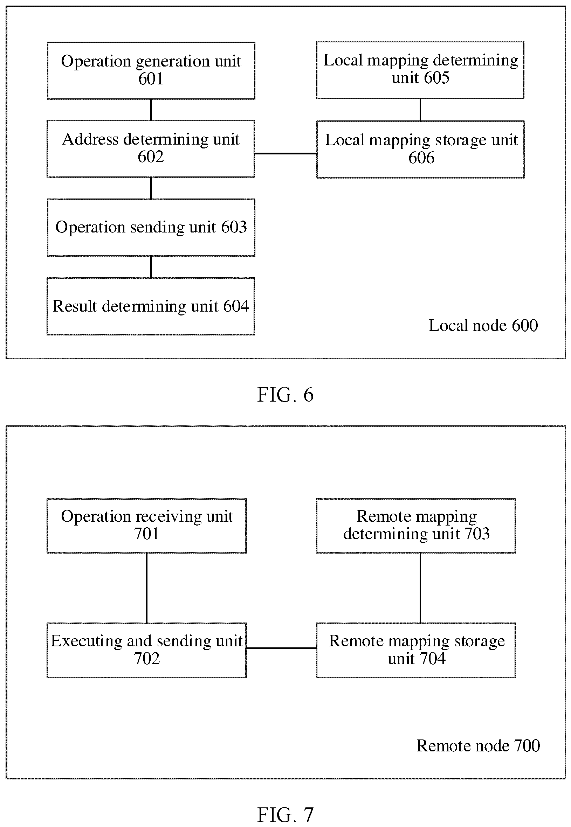

This application further provides a local node. Refer to FIG. 6. A local node 600 includes:
an operation generation unit 601, configured to determine a resource access request, where the resource access request includes a resource access operation and an address that is of the local node and that is pointed to by the resource access operation;
an address determining unit 602, configured to determine an address of a remote node corresponding to the address of the local node;
an operation sending unit 603, configured to send an operation packet to the remote node, where the operation packet includes the resource access operation and the address of the remote node; and
a result determining unit 604, configured to receive an operation result packet that is sent by the remote node and that includes an operation result, where the operation result is determined by the remote node by executing the resource access operation included in the operation packet.

In some possible implementations, the resource access request further includes a remote node number, where the remote node number indicates the remote node to which the address of the remote node belongs. The operation sending unit 603 is further configured to:
send the operation packet to the remote node indicated by the remote node number.

In some possible implementations, the address of the local node is a virtual address of the local node, and the address of the remote node is a virtual address of the remote node.

The local node further includes a local mapping determining unit 605, where the local mapping determining unit 605 is configured to establish a first mapping relationship between the virtual address of the local node and a physical address of the local node, and establish a second mapping relationship between the physical address of the local node and the virtual address of the remote node.

The address determining unit 602 is further configured to determine, based on the first mapping relationship, the physical address of the local node corresponding to the virtual address of the local node; and
determine, based on the second mapping relationship, the virtual address of the remote node corresponding to the physical address of the local node.

In some possible implementations, the virtual address of the local node includes a virtual page number of the local node and an offset, the virtual address of the remote node includes a virtual page number of the remote node and an offset, and the offset included in the virtual address of the local node is the same as the offset included in the virtual address of the remote node.

The address determining unit 602 is further configured to determine, based on the first mapping relationship, a physical page number of the local node corresponding to the virtual page number of the local node;
determine, based on the second mapping relationship, the virtual page number of the remote node corresponding to the physical page number of the local node; and
determine the virtual address of the remote node based on the offset in the address of the local node and the virtual page number of the remote node.

In some possible implementations, the resource access operation includes at least one of the following:
a processor read operation load, a processor write operation store, a processor atomic operation atomic, and direct memory access DMA.

In some possible implementations, the local node further includes: a local mapping storage unit 606, where the local mapping storage unit 606 is configured to store the first mapping relationship in a first page table, and store the second mapping relationship in a second page table, where storage formats of the first page table and the second page table include any one of the following: a page table entry PTE and a page table pointer PTP.

This application further provides a remote node. Refer to FIG. 7. A remote node 700 includes:
an operation receiving unit 701, configured to receive an operation packet sent by a local node, where the operation packet includes a resource access operation and an address of the remote node; and
an executing and sending unit 702, configured to execute the resource access operation to obtain an operation result, and send an operation result packet including the operation result to the local node.

In some possible implementations, the address of the remote node is a virtual address of the remote node, and the remote node further includes a remote mapping determining unit 703, where the remote mapping determining unit 703 is configured to establish a third mapping relationship between the virtual address of the remote node and a physical address of the remote node.

The executing and sending unit 702 is configured to determine, based on the third mapping relationship, the physical address of the remote node corresponding to the virtual address of the remote node; and
execute, based on the physical address of the remote node, the resource access operation included in the operation packet.

In some possible implementations, the resource access operation includes at least one of the following:
a processor read operation load, a processor write operation store, a processor atomic operation atomic, and direct memory access DMA.

In some possible implementations, the remote node further includes: a remote mapping storage unit 704, where the remote mapping storage unit 704 is configured to store the third mapping relationship in a third page table, where a storage format of the third page table includes any one of the following: a page table entry PTE and a page table pointer PTP.

Based on the foregoing content and the same concept, this application further provides a computer program product. The computer program product includes: computer program code, where when the computer program code is run on a computer, the computer is enabled to perform the method for accessing a remote resource in the embodiment shown in FIG. 5.

Based on the foregoing content and the same concept, this application further provides a computer-readable medium. The computer-readable medium stores program code, and when the program code is run on a computer, the computer is enabled to perform the method for accessing a remote resource in the embodiment shown in FIG. 5.

Based on the foregoing content and the same concept, this application provides a chip, including at least one processor and an interface. The interface is configured to provide program instructions or data for the at least one processor; and the at least one processor is configured to execute the program line instructions, to implement the method for accessing a remote resource in the embodiment shown in FIG. 5.

Embodiments of this application provide a system and a method for accessing a remote resource, to resolve a problem that a remote memory, a hard disk, and a resource in another device cannot be directly accessed currently by using a resource access request directly delivered by a local node. By using the system and the method for accessing a remote resource provided in this application, the resource access request delivered by the local node may be translated into a packet that can be transmitted over a network, and the resource access request is directly sent to the remote node after the remote node parses the packet transmitted over the network. In this way, the local node can directly access the remote node, and when the remote resource is accessed, an access delay can be reduced and access steps can be simplified, thereby improving processing efficiency.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of another programmable data processing device generate an apparatus for implementing a specific function in one or more processes in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

Apparently, a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A system for accessing a remote resource, wherein the system comprises a local node and a remote node, wherein
the local node is configured to: determine a resource access request, wherein the resource access request comprises a resource access operation and an address that is of the local node and that is pointed to by the resource access operation; determine an address of the remote node corresponding to the address of the local node; send an operation packet to the remote node, wherein the operation packet comprises the resource access operation and the address of the remote node; and receive an operation result packet sent by the remote node, and determine an operation result based on the operation result packet; and
the remote node is configured to: receive the operation packet; and execute the resource access operation comprised in the operation packet to obtain the operation result, and send the operation result packet to the local node, wherein the operation result packet comprises the operation result.

2. The system according to claim 1, wherein the resource access request further comprises a remote node number, wherein the remote node number indicates the remote node to which the address of the remote node belongs; and
when sending the operation packet to the remote node, the local node is further configured to:
send the operation packet to the remote node indicated by the remote node number.

3. The system according to claim 1 or 2, wherein the address of the local node is a virtual address of the local node, and the address of the remote node is a virtual address of the remote node;
the local node is further configured to:
establish a first mapping relationship between the virtual address of the local node and a physical address of the local node, and establish a second mapping relationship between the physical address of the local node and the virtual address of the remote node; and
when determining the address of the remote node corresponding to the address of the local node, the local node is further configured to:
determine, based on the first mapping relationship, the physical address of the local node corresponding to the virtual address of the local node; and
determine, based on the second mapping relationship, the virtual address of the remote node corresponding to the physical address of the local node.

4. The system according to claim 3, wherein the remote node is further configured to:
establish a third mapping relationship between the virtual address of the remote node and a physical address of the remote node; and
when executing the resource operation comprised in the operation packet, the remote node is further configured to:
determine, based on the third mapping relationship, the physical address of the remote node corresponding to the virtual address of the remote node; and
execute, based on the physical address of the remote node, the resource access operation comprised in the operation packet.

5. The system according to claim 3, wherein the virtual address of the local node comprises a virtual page number of the local node and an offset, the virtual address of the remote node comprises a virtual page number of the remote node and an offset, and the offset comprised in the virtual address of the local node is the same as the offset comprised in the virtual address of the remote node; and
when determining the address of the remote node corresponding to the address of the local node, the local node is further configured to:
determine, based on the first mapping relationship, a physical page number of the local node corresponding to the virtual page number of the local node;
determine, based on the second mapping relationship, the virtual page number of the remote node corresponding to the physical page number of the local node; and
determine the virtual address of the remote node based on the offset in the address of the local node and the virtual page number of the remote node.

6. The system according to any one of claims 1 to 5, wherein the resource access operation comprises at least one of the following:
a processor read operation load, a processor write operation store, a processor atomic operation atomic, and direct memory access DMA.

7. The system according to claim 3, wherein the local node is further configured to: store the first mapping relationship in a first page table, and store the second mapping relationship in a second page table, wherein storage formats of the first page table and the second page table comprise any one of the following: a page table entry PTE and a page table pointer PTP.

8. The system according to claim 4, wherein the remote node is further configured to: store the third mapping relationship in a third page table, wherein a storage format of the third page table comprises any one of the following: a page table entry PTE and a page table pointer PTP.

9. A method for accessing a remote resource, wherein the method comprises:
determining a resource access request, wherein the resource access request comprises a resource access operation and an address that is of a local node and that is pointed to by the resource access operation;
determining an address of a remote node corresponding to the address of the local node;
sending an operation packet to the remote node, wherein the operation packet comprises the resource access operation and the address of the remote node; and
receiving an operation result packet that is sent by the remote node and that comprises an operation result, wherein the operation result is determined by the remote node by executing the resource access operation comprised in the operation packet.

10. The method according to claim 9, wherein the resource access request further comprises a remote node number, wherein the remote node number indicates the remote node to which the address of the remote node belongs; and
the sending an operation packet to the remote node further comprises:
sending the operation packet to the remote node indicated by the remote node number.

11. The method according to claim 9 or 10, wherein the address of the local node is a virtual address of the local node, and the address of the remote node is a virtual address of the remote node;
the method further comprises: establishing a first mapping relationship between the virtual address of the local node and a physical address of the local node, and establishing a second mapping relationship between the physical address of the local node and the virtual address of the remote node; and
the determining an address of a remote node corresponding to the address of the local node comprises:
determining, based on the first mapping relationship, the physical address of the local node corresponding to the virtual address of the local node; and
determining, based on the second mapping relationship, the virtual address of the remote node corresponding to the physical address of the local node.

12. The method according to claim 11, wherein the virtual address of the local node comprises a virtual page number of the local node and an offset, the virtual address of the remote node comprises a virtual page number of the remote node and an offset, and the offset comprised in the virtual address of the local node is the same as the offset comprised in the virtual address of the remote node; and
the determining an address of a remote node corresponding to the address of the local node further comprises:
determining, based on the first mapping relationship, a physical page number of the local node corresponding to the virtual page number of the local node;
determining, based on the second mapping relationship, the virtual page number of the remote node corresponding to the physical page number of the local node; and
determining the virtual address of the remote node based on the offset in the address of the local node and the virtual page number of the remote node.

13. The method according to any one of claims 9 to 12, wherein the resource access operation comprises at least one of the following:
a processor read operation load, a processor write operation store, a processor atomic operation atomic, and direct memory access DMA.

14. The method according to claim 11, wherein the method further comprises: storing the first mapping relationship in a first page table, and storing the second mapping relationship in a second page table, wherein storage formats of the first page table and the second page table comprise any one of the following: a page table entry PTE and a page table pointer PTP.

15. A method for accessing a remote resource, comprising:
receiving an operation packet sent by a local node, wherein the operation packet comprises a resource access operation and an address of a remote node; and
executing the resource access operation to obtain an operation result, and sending an operation result packet comprising the operation result to the local node.

16. The method according to claim 15, wherein the address of the remote node is a virtual address of the remote node, and the method further comprises: establishing a third mapping relationship between the virtual address of the remote node and a physical address of the remote node; and
the executing the resource access operation further comprises:
determining, based on the third mapping relationship, the physical address of the remote node corresponding to the virtual address of the remote node; and
executing, based on the physical address of the remote node, the resource access operation comprised in the operation packet.

17. The method according to claim 15 or 16, wherein the resource access operation comprises at least one of the following:
a processor read operation load, a processor write operation store, a processor atomic operation atomic, and direct memory access DMA.

18. The method according to claim 16, wherein the method further comprises:
storing the third mapping relationship in a third page table, wherein a storage format of the third page table comprises any one of the following: a page table entry PTE and a page table pointer PTP.

19. A local node, wherein the local node comprises:
an operation generation unit, configured to determine a resource access request, wherein the resource access request comprises a resource access operation and an address that is of the local node and that is pointed to by the resource access operation;
an address determining unit, configured to determine an address of a remote node corresponding to the address of the local node;
an operation sending unit, configured to send an operation packet to the remote node, wherein the operation packet comprises the resource access operation and the address of the remote node; and
a result determining unit, configured to receive an operation result packet that is sent by the remote node and that comprises an operation result, wherein the operation result is determined by the remote node by executing the resource access operation comprised in the operation packet.

20. The local node according to claim 19, wherein the resource access request further comprises a remote node number, wherein the remote node number indicates the remote node to which the address of the remote node belongs; and
the operation sending unit is further configured to:
send the operation packet to the remote node indicated by the remote node number.

21. The local node according to claim 19 or 20, wherein the address of the local node is a virtual address of the local node, and the address of the remote node is a virtual address of the remote node;
the local node further comprises a local mapping determining unit, wherein the local mapping determining unit is configured to establish a first mapping relationship between the virtual address of the local node and a physical address of the local node, and establish a second mapping relationship between the physical address of the local node and the virtual address of the remote node; and
the address determining unit is further configured to determine, based on the first mapping relationship, the physical address of the local node corresponding to the virtual address of the local node; and
determine, based on the second mapping relationship, the virtual address of the remote node corresponding to the physical address of the local node.

22. The local node according to claim 21, wherein the virtual address of the local node comprises a virtual page number of the local node and an offset, the virtual address of the remote node comprises a virtual page number of the remote node and an offset, and the offset comprised in the virtual address of the local node is the same as the offset comprised in the virtual address of the remote node; and
the address determining unit is further configured to determine, based on the first mapping relationship, a physical page number of the local node corresponding to the virtual page number of the local node;
determine, based on the second mapping relationship, the virtual page number of the remote node corresponding to the physical page number of the local node; and
determine the virtual address of the remote node based on the offset in the address of the local node and the virtual page number of the remote node.

23. The local node according to any one of claims 19 to 22, wherein the resource access operation comprises at least one of the following:
a processor read operation load, a processor write operation store, a processor atomic operation atomic, and direct memory access DMA.

24. The local node according to claim 21, wherein the local node further comprises: a local mapping storage unit, wherein the local mapping storage unit is configured to store the first mapping relationship in a first page table, and store the second mapping relationship in a second page table, wherein storage formats of the first page table and the second page table comprise any one of the following: a page table entry PTE and a page table pointer PTP.

25. A remote node, wherein the remote node comprises:
an operation receiving unit, configured to receive an operation packet sent by a local node, wherein the operation packet comprises a resource access operation and an address of the remote node; and
an executing and sending unit, configured to execute the resource access operation to obtain an operation result, and send an operation result packet comprising the operation result to the local node.

26. The remote node according to claim 25, wherein the address of the remote node is a virtual address of the remote node, and the remote node further comprises a remote mapping determining unit, wherein the remote mapping determining unit is configured to establish a third mapping relationship between the virtual address of the remote node and a physical address of the remote node; and
the executing and sending unit is configured to determine, based on the third mapping relationship, the physical address of the remote node corresponding to the virtual address of the remote node; and
execute, based on the physical address of the remote node, the resource access operation comprised in the operation packet.

27. The remote node according to claim 25 or 26, wherein the resource access operation comprises at least one of the following:
a processor read operation load, a processor write operation store, a processor atomic operation atomic, and direct memory access DMA.

28. The remote node according to claim 26, wherein the remote node further comprises: a remote mapping storage unit, wherein the remote mapping storage unit is configured to store the third mapping relationship in a third page table, wherein a storage format of the third page table comprises any one of the following: a page table entry PTE and a page table pointer PTP.
